# EUROPEAN PATENT APPLICATION

(11) **EP 3 002 377 A1**
(43) Date of publication of application: **06.04.2016**
(21) Application number: 15188018.4
(22) Date of filing: 01.10.2015
(51) Int. Cl.: E03F 5/04, F16L 19/065, F16L 25/14

(54) **FLOOR DRAIN WITH SIPHON**

(30) Priority: 02.10.2014 GB 201417458
(71) Applicant: Kohler Mira Limited, Gloucestershire GL52 5EP (GB)
(72) Inventor: HOLLAND, Stuart, Cheltenham, Gloucestershire GL52 5EP (GB); TUSTAIN, Julia, Cheltenham, Gloucestershire GL52 5EP (GB); NICHOLS, John, Cheltenham, Gloucestershire GL52 5EP (GB)
(74) Representative: Wightman, David Alexander

(57) **Abstract**

A waste trap 1 for a shower tray 24 has a trap body 2 with a trap inlet 20 connected to an outlet 22 of the shower tray and a trap outlet 40a connected to a waste pipe. The trap body 2 has a base 14 and an outer wall 16 defining a chamber 18, and a trap overflow 38a between the trap inlet 20 and the trap outlet 40a. A trap insert 4 divides the chamber 18 into an outer chamber 18a arranged to receive waste water from the trap inlet 20 and an inner chamber 18b arranged to receive waste water from the outer chamber 18a. The trap overflow 38a is disposed in the inner chamber 18b and the trap 1 is configured so that a water seal is formed between the trap inlet 20 and the trap overflow 38a by water contained in the outer chamber 18a and the inner chamber 18b. The trap body 2 defines a flow channel 36 with the trap overflow 38a at a first end of the flow channel 36 and the trap outlet 40a at a second end of the flow channel 36 wherein end portions of the flow channel 36 extend at an angle to one another.

## Description

This invention relates to a waste trap for plumbing fittings. The invention has particular, but not exclusive, application to waste traps for shower trays.

Waste traps are commonly provided between an outlet from a shower tray and a waste pipe for passage of waste water from the shower tray to the sewage system. The waste trap forms a water seal that provides a barrier between the sewage system and the shower tray to prevent backflow of unpleasant odours in the sewage system to the shower tray.

Particular problems arise for installations where the space available to install the waste trap is limited such as when a shower tray is located on a solid floor. Compact waste traps of reduced height that can be used in such installations often have a complicated flow path to provide the required water seal and this can make it difficult to access and clean any blockage occurring in the waste trap and/or in the waste pipe connected to the waste trap.

Another problem arises due to the range of sizes of waste pipes that can be encountered in different installations and providing a separate waste trap for each size of waste pipe adds to costs for the manufacturer and supplier as well as giving rise to a risk of leakage if the wrong waste trap is selected and fitted.

Accordingly, there is a need for a waste trap that facilitates cleaning and/or that is capable of being connected to different sizes of waste pipes.

The present invention has been made from a consideration of the foregoing and seeks to meet one or both of these needs.

According to a first aspect of the invention there is provided a waste trap for a plumbing fitting, the waste trap including a trap body for mounting below an outlet of the plumbing fitting, the trap body having a base and an outer wall defining a chamber, a trap inlet adapted to be connected to the outlet of the plumbing fitting, a trap outlet adapted to be connected to a waste pipe, a trap overflow between the trap inlet and the trap outlet, and a trap insert that divides the chamber into an outer chamber arranged to receive waste water from the trap inlet and an inner chamber arranged to receive waste water from the outer chamber, wherein the trap overflow is disposed in the inner chamber and the trap is configured so that a water seal is formed between the trap inlet and the trap overflow by water contained in the outer chamber and the inner chamber, wherein the body defines a flow channel with the trap overflow at a first end of the flow channel and the trap outlet at a second end of the flow channel, and wherein inner and outer end portions of the flow channel extend at an angle to one another.

By this aspect of the invention installation height may be reduced so that the waste trap is suitable for use where the available space is restricted. Alternatively or additionally, inspection or cleaning of the flow channel may be simplified.

It may be that the inner end portion and the outer end portion extend approximately at right angles to each other. It may be that the inner end portion is configured to extend approximately at right angles to a mounting plane of the waste trap. It may be the outer end portion is configured to extend approximately parallel to the mounting plane of the waste trap. It may be that the outer end portion is configured for connection to a waste pipe. It may be that the outer end portion is configured for connection to different sizes of waste pipes. It may be that an installed position of the waste trap can be adjusted so that the position of the trap outlet can be adjusted through 360 degrees about an axis normal to the mounting plane so that the position of the trap outlet is flexible for connection to a waste pipe from any direction. It may be that the trap insert is removable from the trap body for accessing the trap overflow.

According to a second aspect of the invention, there is provided a waste trap for a plumbing fitting, the waste trap including a trap body for mounting below an outlet of the plumbing fitting, the trap body having a base and an outer wall defining a chamber, a trap inlet adapted to be connected to the outlet of the plumbing fitting, a trap outlet adapted to be connected to a waste pipe, a trap overflow between the trap inlet and the trap outlet, and a trap insert that divides the chamber into an outer chamber arranged to receive waste water from the trap inlet and an inner chamber arranged to receive waste water from the outer chamber, wherein the trap overflow is disposed in the inner chamber and the trap is configured so that a water seal is formed between the trap inlet and the trap overflow by water contained in the outer chamber and the inner chamber, wherein the trap body defines a flow channel with the trap overflow at a first end of the flow channel and the trap outlet at a second end of the flow channel, and wherein the trap insert covers the trap overflow and is removable for accessing the trap overflow.

By this aspect of the invention, the flow channel can be accessed through the trap inlet by removing the trap insert with the waste trap in situ. In this way, access to the underside of the outlet in a plumbing fitting provided with the waste trap may not be required for removing debris blocking or reducing flow of waste water through the waste trap.

The waste trap may comprise any of the features of the waste trap according to the first aspect of the invention.

According to a third aspect of the invention, there is provided a plumbing fitting comprising a water receptacle, an outlet in a base of the receptacle through which waste water can flow and a waste trap according to the first or second aspects of the invention connected to the outlet.

The plumbing fitting may be a shower tray, bath, bidet, basin or sink. The waste trap may comprise any feature of the waste traps according to the first or second aspects of the invention.

According to a fourth aspect of the invention, there is provided a waste trap for use in an outlet of a plumbing fitting, the waste trap having an outlet configured for connection to different sizes of waste pipes.

It may be that the outlet includes a pipe section configured for connection internally and/or externally to different sizes of waste pipe. It may be that the internal diameter and/or external diameter of the pipe section is configured for connecting different sizes of waste pipes. It may be that the internal diameter is stepped for internally connecting different sizes of waste pipes.

It may be that the pipe section has an external screw thread for mounting a compression nut and sealing ring to provide a compression seal with a waste pipe received within the pipe section. Alternatively, a weld seal may be provided with a waste pipe received in the pipe section. It may be that the external screw thread can be removed for externally connecting a waste pipe.

According to a fifth aspect of the invention there is provided a plumbing fitting comprising a water receptacle, an outlet in a base of the receptacle through which waste water can flow and a waste trap according to the fourth aspect connected to the outlet.

The plumbing fitting may be a shower tray, bath, bidet, basin or sink.

Any of the features described in connection with the first, second or third aspects of the invention may be employed in the fourth or fifth aspects of the invention and vice versa.

According to a sixth aspect of the invention, there is provided a kit of parts comprising a waste trap according to the first and/or second and/or fourth aspects of the invention and a sanitary ware unit.

Any of the features described in connection with the third and/or fifth aspects of the invention may be employed in the sixth aspect of the invention.

These and other features, benefits and advantages of the invention will be understood from the following description of embodiments with reference to the accompanying drawings and wherein like reference numerals are used throughout to indicate the same or similar parts and in which:
**FIGURE 1** is an exploded perspective view of a waste trap according to an embodiment of the invention; and
**FIGURE 2** is a sectional view of the waste trap of Figure 1;

Referring to the accompanying drawings, an embodiment of a waste trap 1 for drainage of waste water from a plumbing fitting is shown.

The waste trap 1 includes a trap body 2, an insert 4, a seal 6, and a mounting ring 8. The waste trap 1 may also include a cap 10 and/or a debris trap 12.

The trap body 2, insert 4, mounting ring 8 and, where provided, cap 10 and debris trap 12 may be made of plastics, for example plastic mouldings. The seal 6 may be made of rubber or other materials suitable to provide a watertight seal. The thickness of the seal 6 may be chosen to suit overall flow requirements.

The trap body 2 has a base 14 and an outer wall 16 that define a trap chamber 18.

The outer wall 16 of the trap body 2 is preferably cylindrical in shape although this is not essential and in other embodiments the outer wall may have other shapes.

The trap body 2 has an inlet opening 20 at the top of the outer wall bounded by an external mounting flange 20a and the seal 6 seats on the flange 20a.

In use the trap body 2 is located below an outlet opening 22 in a sanitary fitting 24 such as a shower tray and the mounting flange 20a extends around the opening 22 on the underside of the fitting 24 with the seal 6 between the flange 20a and the fitting 24.

The mounting ring 8 extends around the opening 22 on the topside of the fitting 24 and is secured to the trap body 2 by one or more fasteners.

In this embodiment, the mounting ring 8 is releasably secured to the trap body 2 by one or more bolts 26 that extend through holes 32 in the ring 8 and the opening 22 to engage threaded bores 30 in the trap body 2. Any other type of fastener may be employed.

The bolts 26 may be uniformly spaced apart in the circumferential direction. Three bolts 26 are shown but it will be understood that this is not essential and that more than or less than three bolts may be employed.

The trap body 2 is secured on the underside of the fitting 24 on tightening the bolts 26 and the seal 6 is compressed between the mounting flange 20a and the underside of the fitting 24 to provide a watertight seal between the fitting 24 and the trap body 2.

The cap 10 fits over and covers the mounting ring 8 to conceal the opening 22 in the fitting 24 and the opening 20 in the trap body 2.

In this embodiment, the cap 10 is circular although this is not essential and in other embodiments the cap 10 may be of different shape.

The diameter of the cap 10 is such that it may extend to the edge of or beyond the edge of the mounting ring 8. In this way any parts of the waste trap 1 below the cap 10 are concealed when viewed from above.

The cap 10 is secured to the mounting ring 8 to provide one or more openings (not shown) between the cap 10 and the mounting ring 8 around the peripheral edge of the cap 10 for waste water to flow from the sanitary fitting 24 into the waste trap 1.

The cap 10 may be releasably secured to the mounting ring 8 allowing the cap 10 to be removed to provide access to the trap chamber 18 through the opening 22 in the fitting 24 and the opening 20 in the trap body 2.

In this embodiment, the cap 10 is secured to the mounting ring 8 in a locked condition by engagement of one or more formations 32 on the underside of the cap with one or more formations 34 on the mounting ring 8.

The formations 32, 34 may be configured to engage when the cap 10 is rotated relative to the mounting ring 8 to secure the cap 10 in the locked condition that prevents the cap 10 being removed in a vertical direction. The formations 32, 34 may be released by rotation of the cap 10 in the reverse direction that allows the cap 10 to be removed to provide access to the trap chamber 18.

Three formations 32, 34 are shown on the cap 10 and mounting ring 8 but it will be understood that this is not essential and that more than or less than three formations may be employed. The formations 32, 34 may be uniformly spaced apart in the circumferential direction. The formations 32, 34 may have any suitable shape and/or configuration.

The trap body 2 also includes a flow channel or pipe 36 which may be formed integrally with the trap body 2.

The pipe 36 has an inner or first end portion 38 within the chamber 18 and an outer or second end portion 40 that extends from the inner end portion 38 through the outer wall 16 and externally of the chamber 18 for connection to a waste pipe (not shown).

This may reduce the overall height of the waste trap 1. This may facilitate installation of the waste trap 1 where the available space below the sanitary fitting 24 is restricted.

The inner end portion 38 and the outer end portion 40 preferably extend at an angle to one another.

In this embodiment, the inner and outer end portions 38, 40 extend substantially at right angles to one another although this is not essential and in other embodiments the angle may be more than or less than a right angle.

It may be that the inner end portion 38 extends in a substantially vertical direction and the outer end portion 40 extends in a substantially horizontal direction when the waste trap 1 is installed.

It may be that the inner end portion 38 extends substantially normal to a mounting plane MP of the waste trap 1 and the outer end portion 40 extends substantially parallel to the mounting plane MP.

An inlet end of the inner end portion 38 is open and defines a trap overflow 38a. The trap overflow 38a is spaced from the base 14 of the trap body 2 and from the outer wall 16 of the trap body 2.

The trap overflow 38a may extend above the mounting flange 20a although this is not essential and in other embodiments the trap overflow 38a may be level with or below the mounting flange 20a.

In general, the spacing of trap overflow 38a from the base 14 of the trap body 2 is such as to provide a water seal height of at least 50mm to comply with regulations.

An outlet end of the outer end portion 40 is open and defines a trap outlet 40a.

The outer end portion 40 may be configured for connection to a range of different sizes of waste pipes as described in more detail later.

The waste trap 1 can be installed to adjust the position of the trap outlet 40a through 360 degrees about an axis normal to the mounting plane MP so that the position of the outlet 40a is flexible for connection to a waste pipe from any direction.

The trap insert 4 includes a side wall 42 that is generally cylindrical in shape although this is not essential and in other embodiments the side wall may have other shapes.

The trap insert 4 is open at one end and closed at the other end by an end wall 44 integral with the side wall 42. The trap insert 4 locates over the pipe 36 within the chamber 18 and has a cut out section 46 in the side wall 42 that extends from the open end and provides a break in the side wall 42 to accommodate the pipe 36.

The cut out section 46 is sealed around the pipe 36 by a seal 48. The seal 48 may be located in a groove 50 that extends around the cut-out section 46. The seal 48 may be made of rubber or other materials suitable to provide a watertight seal.

The end wall 44 of the trap insert 4 extends over and is spaced from the trap overflow 38a and the side wall 42 is spaced from the outer wall 16 of the trap body 2 and from the inner end portion 38 of the pipe 36 to divide the chamber 18 into an outer chamber 18a and an inner chamber 18b separated by the side wall 42 of the trap insert 4.

The trap insert 4 is arranged so that a gap (not shown) is provided for water to flow from the outer chamber 18a to the inner chamber 18b at or near the bottom of the chamber 18. The gap may be formed by any suitable means.

In this embodiment, the base 14 of the trap body 2 is provided with one or more formations 52 configured to co-operate with one or more formations 54 on the trap insert 4 to locate the trap insert 4 within the chamber 18.

The formations 52, 54 engage when the trap insert 4 is placed in the trap body 2 to position the trap insert 4 with the open end of the trap insert 4 spaced from the base 14 of the trap body 2 allowing water to flow under the open end of the trap insert 4 from the outer chamber 18a to the inner chamber 18b.

The formations 52, 54 may be uniformly spaced apart in the circumferential direction. The formations 52, 54 may have any suitable shape and/or configuration.

In other embodiments the trap insert 4 and/or trap body 2 may be configured to allow water to flow from the outer chamber 18a to the inner chamber 18b in any suitable manner such as, for example, one or more holes in the side wall 42 of the trap insert 4.

The trap insert 4 can be accessed from above through the opening 22 in the sanitary fitting 24 and the opening 20 in the trap body 2 with the waste trap 1 installed in situ by removing the cap 10.

The trap insert 4 can be removed through the openings 20, 22 to provide access to the open end of the pipe 36 within the trap body 2 for inspection and can be replaced through the opening 22 after inspection.

In this way, any blockage in the pipe 36 can be cleared with the trap body 2 in situ without requiring access to the underside of the fitting 24.

It may be that the trap insert 4 is provided with a handle 56 to assist removing the trap insert 4 from the trap body 2 and replacing the trap insert 4 in the trap body 2.

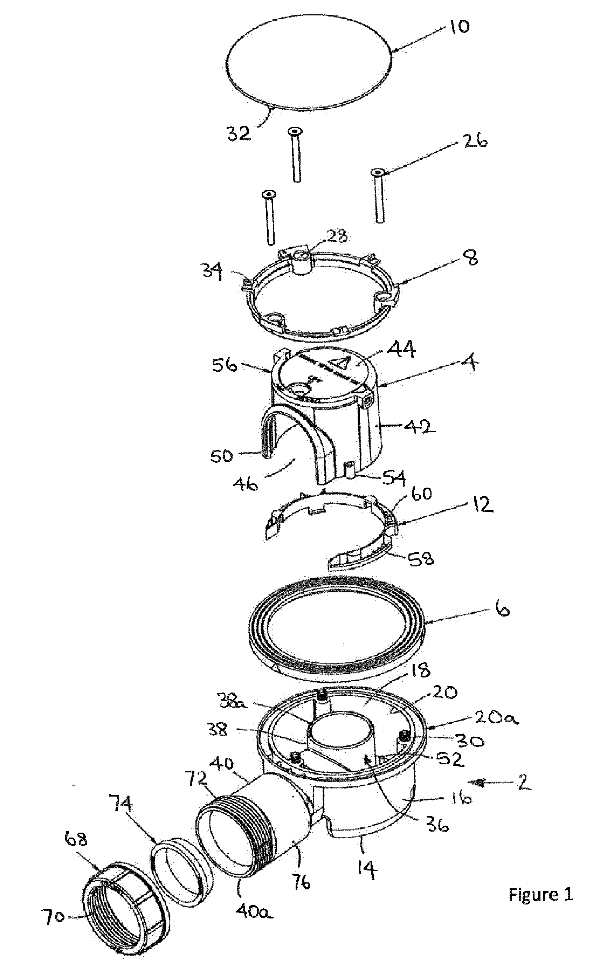

The handle may be attached to the trap insert 4 by hinges for pivotal movement from an inoperative or lowered position (Figure 1) to an operative or raised position when it is required to remove the trap insert 4 from the trap body 2. The handle 56 may be substantially flush with the end wall 44 of the trap insert 4 in the inoperative position.

The debris trap 12 may be located in the outer chamber 18a so that waste water passes through the debris trap 12 before entering the inner chamber 18b and any hair or other material carried by the waste water is trapped and retained by the debris trap 12.

In this way, clogging of the pipe 36 may be prevented and hair or other material retained by the debris trap 12 can be easily removed by lifting off the cap 10 to provide access to the outer chamber 18a.

It may be that the debris trap 12 is located at or near the bottom of the trap chamber 18. The debris trap 12 may be removable from the trap body 2 for inspection and/or cleaning.

The debris trap 12 may comprise a generally C-shaped member 58 that extends around the side wall 42 of the trap insert 4. The member 58 may be arranged at the lower end of the side wall 42.

The member 58 may locate over the formations 52 so as to be raised with the trap insert 4 when the trap insert 4 is removed from the trap chamber 18. The member 58 may comprise a mesh 60 to trap and retain hair or other material.

In use, waste water from the sanitary fitting 24 flows between the cap 10 and mounting ring 8 through the outlet opening 22 in the fitting 24 into the outer chamber 18a of the waste trap 1.

The water flows from the outer chamber 18a through the debris trap 12 under the side wall 40 of the trap insert 4 into the inner chamber 18b.

When the water level in the inner chamber 18b reaches the overflow 38a at the top of the inner end portion 38 of the pipe 36, the water overflows into the pipe 36 and flows through the pipe 36 to the outlet 40a for discharge to a sewage system via a waste pipe (not shown) connected to the outlet 40a.

When the flow of water from the plumbing fitting stops, the water levels in the outer and inner chambers 18a, 18b equalise at or below the overflow 38a at the top of the inner end portion 38 of the pipe 26.

The height of the water within the trap body 2 forms a water seal between the outer and inner chambers 18a, 18b.

The overflow 38a at the top of the inner end portion 38 of the pipe 36 opens to an area within the trap insert 4 above the water level in the inner chamber 18b.

In this way, any unpleasant odours from the sewage system are confined within the area above the water level in the inner chamber 18b by the water seal between the outer and inner chambers 18a, 18b.

If the flow of waste water is prevented or reduced by material retained in the debris trap 12 or in the pipe 36, the cap 10 can be removed to provide access to the trap chamber 18.

It may be that material retained by the debris trap 12 can be removed without removing the debris trap 12 and the cap 10 replaced. Alternatively, the debris trap 12 may be removed for cleaning and replaced prior to replacing the cap 10.

If required, the trap insert 4 can be removed to provide access to the pipe 26 and any material retained in the pipe 12 causing a blockage can be removed and/or dislodged and the trap insert 4 replaced prior to replacing the cap 10.

It may be that the debris trap 12 can be removed and replaced with the trap insert 4.

According to a preferred feature of the waste trap 1, the outer end portion 40a of the pipe 36 is configured to enable different sizes of waste pipes to be connected internally and/or externally of the pipe 36.

To provide an internal connection, the outer end portion of the pipe 36 is provided with an internal shoulder 62 producing a step change in the internal diameter such that the internal diameter of the pipe 36 in a first section 64 is larger than the internal diameter in a second section 66.

This allows waste pipes of different diameter to be inserted into the pipe 36 and a seal formed by any suitable means such as a compression seal or solvent weld seal.

A compression seal may be provided by engagement of a compression nut 68 having an internal screw threaded portion 70 with an external screw threaded portion 72 at the end of the pipe 36 to compress a sealing ring 74.

By way of example, in this embodiment, the internal diameter of the pipe 36 at point A may be sufficient to allow a compression seal or solvent weld seal to be formed with a 40mm diameter waste pipe and the internal diameter at point B may allow a compression seal to be formed with a 41mm waste pipe and a solvent weld seal to be formed with a 43mm waste pipe.

More than one internal shoulder may be provided to adapt the internal diameter according to requirements.

To provide an external connection, the outer end portion of the pipe 36 has an external cylindrical portion 76 rearwardly of the screw threaded portion 74.

The screw threaded portion 74 can be removed by cutting the pipe 36 and push fitting a waste pipe over the portion 76 of the pipe 36 and a seal formed by any suitable means such as a solvent weld seal.

By way of example, in this embodiment, the external diameter at point C may be sufficient to allow a solvent weld seal to be formed with a 50mm waste pipe.

More than one external cylindrical portion having different diameters may be provided to adapt the external diameter according to requirements.

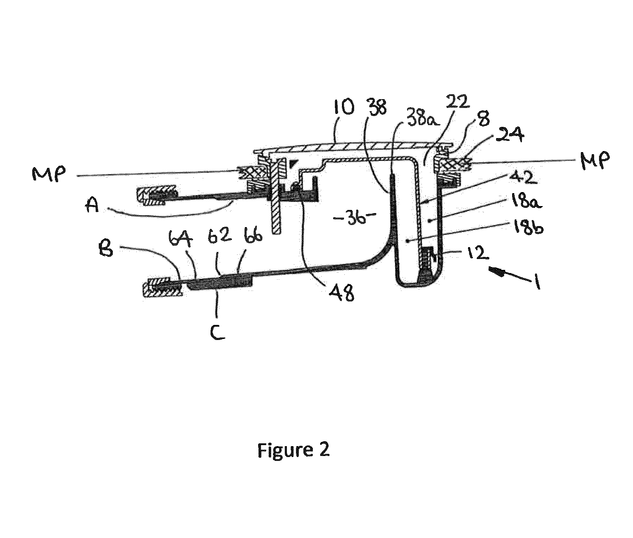

It will be understood that the capability of connecting different sizes of waste pipes is not limited to the other features of the waste trap 1 shown and described with reference to Figures 1 and 2 and that this feature may be employed in other waste traps or plumbing fittings.

The waste trap 1 described herein has a number of advantages including, but not limited to:
- 360 degrees outlet position
- Full outlet pipe access
- Reduced overall height
- Low part count and simple tooling
- Flexible for different cover designs
- Flexible for different waste pipe sizes

It will be understood that the invention is not limited to the embodiments described herein and that features of the waste trap may be altered, omitted or adapted according to the requirements of the waste trap. It will also be understood that the invention includes any novel feature described herein as well as combinations and subcombinations of any of the features and equivalents thereof.

Although the invention has been described with reference to use of the waste trap with a shower tray, it will be appreciated that the waste trap may be used with other plumbing fittings including, but not limited to baths, bidets, basins and sinks.

## Claims

1. A waste trap for a plumbing fitting, the waste trap including a trap body for mounting below an outlet of the plumbing fitting, the trap body having a base and an outer wall defining a chamber, a trap inlet adapted to be connected to the outlet of the plumbing fitting, a trap outlet adapted to be connected to a waste pipe, a trap overflow between the trap inlet and the trap outlet, and a trap insert that divides the chamber into an outer chamber arranged to receive waste water from the trap inlet and an inner chamber arranged to receive waste water from the outer chamber, wherein the trap overflow is disposed in the inner chamber and the trap is configured so that a water seal is formed between the trap inlet and the trap overflow by water contained in the outer chamber and the inner chamber, wherein the body defines a flow channel with the trap overflow at a first end of the flow channel and the trap outlet at a second end of the flow channel, and wherein end portions of the flow channel extend at an angle to one another.

2. A waste trap according to claim 1 wherein the flow channel is provided by a pipe having an inner end portion within the inner chamber and an outer end portion externally of the trap body.

3. A waste trap according to claim 2 wherein the trap overflow is provided by the inner end portion and the trap outlet is provided by the outer end portion of the pipe.

4. A waste trap according to claim 2 or claim 3 wherein the outer end portion is configured for connection to different sizes of waste pipes.

5. A waste trap according to any of claims 2 to 4 wherein the inner end portion and the outer end portion extend approximately at right angles to each other.

6. A waste trap according to any of claims 2 to 5 wherein the inner end portion is configured to extend approximately at right angles to a mounting plane of the waste trap.

7. A waste trap according to any of claims 2 to 6 wherein the outer end portion is configured to extend approximately parallel to the mounting plane of the waste trap.

8. A waste trap according to any of claims 2 to 7 wherein the outer end portion includes a pipe section configured for connection internally and/or externally to different sizes of waste pipes.

9. A waste trap according to claim 8 wherein an internal diameter and/or external diameter of the pipe section is configured for connecting different sizes of waste pipes.

10. A waste trap according to claim 9 wherein the internal diameter is stepped for internally connecting different sizes of waste pipes.

11. A waste trap according to any of claims 8 to 10 wherein the pipe section has an external screw thread for mounting a compression nut and sealing ring to provide a compression seal with a waste pipe received within the pipe section.

12. A waste trap according to claim 11 wherein the external screw thread can be removed for externally connecting a waste pipe.

13. A waste trap according to any of claims 8 to 10 wherein the pipe section is configured to provide a weld seal with a waste pipe internally or externally of the pipe section.

14. A waste trap according to any preceding claim wherein the trap insert covers the trap overflow and is removable for accessing the trap overflow.

15. A waste trap according to any preceding claim including a cap arranged to cover the trap inlet, wherein the cap is removable and/or a debris trap arranged to collect and retain material carried by waste water, wherein the debris trap is removable.
